# EUROPEAN PATENT APPLICATION

(11) **EP 3 089 375 A1**
(43) Date of publication of application: **02.11.2016**
(21) Application number: 15189786.5
(22) Date of filing: 14.10.2015
(51) Int. Cl.: H04B 5/00, H02J 50/00, H02J 5/00, H01Q 7/00

(54) **WIRELESS CHARGING DEVICE AND SYSTEM WITH SUPPRESSED ELECTROMAGNETIC WAVE DIVERGENCE AND ENHANCED CHARGING EFFICIENCY**

(30) Priority: 30.04.2015 TW 104113889; 02.06.2015 TW 104117862
(71) Applicant: JTOUCH Corporation, Taoyuan County 32063 (TW)
(72) Inventor: YEH, Yu-Chou, 32063 Jhongli City, Taoyuan County (TW); YEH, Tsung-Her, 32063 Jhongli City, Taoyuan County (TW); WU, Chen-Chi, 32063 Jhongli City, Taoyuan County (TW); YEH, Chun-Ting, 32063 Jhongli City, Taoyuan County (TW); HUANG, Hsueh-Jung, 32063 Jhongli City, Taoyuan County (TW); CHENG, Bo-Ruei, 32063 Jhongli City, Taoyuan County (TW); HU, Chih-Ming, 32063 Jhongli City, Taoyuan County (TW); TSUI, Chiu-Cheng, 32063 Jhongli City, Taoyuan County (TW)
(74) Representative: 2K Patentanwälte Blasberg Kewitz & Reichel

(57) **Abstract**

A wireless charging device (3, 3a, 3b, 3c, 3d) includes a casing (30), a transmitter coil assembly (31, 31a, 31b) and a shielding structure (34). The casing (30) includes a main body (301) with an accommodation space (303) and an entrance (304). At least one power-receiving device (4, 4') is accommodated within the accommodation space (303). The transmitter coil assembly (31, 31a, 31b) is disposed within the main body (301), and emits an electromagnetic wave with at least one specified frequency for wirelessly charging the at least one power-receiving device (4, 4'). Each transmitter coil assembly (31, 31a, 31b) includes at least one antenna (312, 313) for receiving an AC signal so as to emit the electromagnetic wave. The shielding structure (34) is attached on an outer surface of the main body (301) or disposed within the main body (301). The shielding structure (34) at least shields the antenna (312, 313) of the transmitter coil assembly (31, 31a, 31b) so as to block divergence of the electromagnetic wave.

## Description

### FIELD OF THE INVENTION

The present invention relates to a wireless charging device and a wireless charging system, and more particularly to a wireless charging device and a wireless charging system with suppressed electromagnetic wave divergence and enhanced charging efficiency.

### BACKGROUND OF THE INVENTION

Nowadays, various portable electronic devices such as mobile phones or tablet computers are widely used in our daily lives. For providing electric energy to the portable electronic device, a charging device is used to charge a built-in battery of the portable electronic device. Generally, the charging devices are classified into wired charging devices and wireless charging devices. Since the wireless charging device can be operated in various environments and not restricted by the power cable, the wired charging device is gradually replaced by the wireless charging device.

The wireless charging operation is also referred as an inductive charging operation or a non-contact charging operation. By the wireless charging technology, electric energy is transmitted from a power-providing device to a power-receiving device in a wireless transmission manner. Generally, three wireless power charging groups include WPC (Wireless Power Consortium) (QI), PMA (Power Matters Alliance) and A4WP (Alliance for Wireless Power). The WPC and A4WP standards are the mainstreams of the wireless charging technologies. The wireless charging technologies comprise a magnetic induction technology (low frequency) and a magnetic resonance technology (high frequency). The magnetic induction technology is only applied to short-distance energy transmission. The power conversion efficiency of the magnetic induction technology is higher. However, since the power-receiving device should be aligned with and attached on the power-providing device according to the magnetic induction technology, the power-providing device cannot charge plural power-receiving devices simultaneously. By the magnetic resonance technology, the energy transmission between a transmitter terminal and a receiver terminal is implemented at a specified resonant frequency. Consequently, the magnetic resonance technology can be applied to the longer-distance energy transmission when compared with the magnetic induction technology.

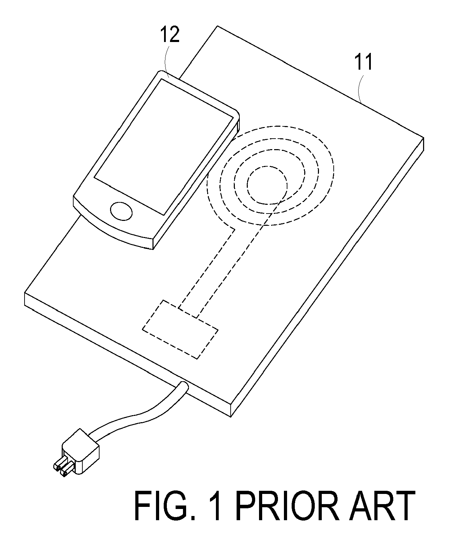

FIG. 1 schematically illustrates the use of a wireless charging device to wirelessly charge a power-receiving device. As shown in FIG. 1, the wireless charging device 11 transmits electric energy to the power-receiving device 12 in a wireless transmission manner. Generally, a coil assembly of the wireless charging device 11 is made of a multi-core copper wire. Moreover, after the copper wire is mounted on a rigid substrate which is made of ferrite magnetic oxide, the coil assembly is produced. The coil assembly is installed within a plate-shaped casing. Since the power-receiving device 12 has to be located at the outside of the wireless charging device 11 during the charging process, some problems occur. For example, the electromagnetic wave from the coil assembly of the wireless charging device 11 is radiated to everywhere of the surroundings. Consequently, the user is possibly hurt by the electromagnetic wave, and the charging efficiency of the wireless charging device 11 is usually insufficient. Moreover, since the power-receiving device 12 has to be located at the outside of the wireless charging device 11 and disposed within an effective charging distance, some measures should be taken to assure that the power-receiving device 12 is located within the effective charging distance. For example, the wireless charging device 11 is additionally equipped with a sensor for prompting the user that the power-receiving device 12 is beyond the effective charging distance. Alternatively, a positioning mechanism is used to assist in positioning the power-receiving device 12. The use of the sensor or the positioning mechanism increases the fabricating cost of the wireless charging device 11. Moreover, since the power-receiving device 12 cannot be arbitrarily placed by the user during the charging process, the applications of the wireless charging device 11 are limited.

Moreover, the current wireless charging devices are operated by different technologies. Consequently, the coupling frequencies of the coil assemblies and the transmitter terminal circuits are usually different. Under this circumstance, the components of the wireless charging devices and the components of the power-receiving devices are incompatible. Due to the incompatibility, the coil assemblies and the circuitry components of different wireless charging devices are usually different. Consequently, the wireless charging device is customized according to the type of the portable electronic device. Under this circumstance, the applications of the wireless charging device are restricted. Moreover, the wireless charging device is unable to wirelessly charge plural power-receiving devices which are designed according to different wireless charging technologies.

### SUMMARY OF THE INVENTION

At is an object of the present invention to provide an enhanced wireless charging device, particularly one that is capable of suppressing the divergence of the electromagnetic wave in order to reduce the electromagnetic radiation injury. It is a further object of the present invention to provide an enhanced wireless charging system, particularly comprising the enhanced wireless charging device.

These problems are solved by a wireless charging device and by a wireless charging system according to claim 12. Further advantageous embodiments are the subject-matter of the dependent claims.

According to the present invention, since the electromagnetic wave is converged to a charging zone to charge the one or plural power-receiving devices in a non-contact manner, the charging efficiency of the wireless charging device is enhanced.

A wireless charging device according to a further aspect of the present invention has an accommodation space for accommodating one or plural power-receiving devices. Consequently, the one or plural power-receiving device accommodated within the accommodation space can be wirelessly charged by the electromagnetic wave with the specified frequency or the plural frequencies at the same time or at different times. Moreover, since the structure of the wireless charging device is simple, the fabricating cost is low and the application and convenience are extended.

A wireless charging system according to a further aspect of the present invention comprises a wireless charging device and one or plural power-receiving devices. The wireless charging device can adaptively or selectively charge the power-receiving devices according to magnetic resonance or magnetic induction.

In accordance with an aspect of the present invention, there is provided a wireless charging device for wirelessly charging at least one power-receiving device. The wireless charging device includes a casing, at least one transmitter coil assembly and a shielding structure. The casing includes a main body. The main body has an accommodation space and an entrance. The at least one power-receiving device is accommodated within the accommodation space. The at least one transmitter coil assembly is disposed within the main body, and emits an electromagnetic wave with at least one specified frequency for wirelessly charging the at least one power-receiving device. Each transmitter coil assembly includes at least one antenna for receiving an AC signal so as to emit the electromagnetic wave. The shielding structure is attached on an outer surface of the main body or disposed within the main body. The shielding structure at least shields the antenna of the transmitter coil assembly so as to block divergence of the electromagnetic wave.

In accordance with a further related aspect of the present invention, there is provided a wireless charging system. The wireless charging system includes a wireless charging device and at least one power-receiving device. The wireless charging device includes a casing, at least one transmitter coil assembly and a shielding structure. The casing includes a main body. The main body has an accommodation space and an entrance. The at least one transmitter coil assembly is disposed within the main body, and emits an electromagnetic wave with at least one specified frequency. Each transmitter coil assembly includes at least one antenna for receiving an AC signal so as to emit the electromagnetic wave. The shielding structure is attached on an outer surface of the main body or disposed within the main body. The shielding structure at least shields the antenna of the transmitter coil assembly so as to block divergence of the electromagnetic wave. The at least one power-receiving device is accommodated within the accommodation space of the casing. Each power-receiving device includes a receiver coil assembly. The receiver coil assembly receives an electric energy from the wireless charging device in response to a coupling effect of the receiver coil assembly and the corresponding transmitter coil assembly.

The above contents of the present invention will become more readily apparent to those ordinarily skilled in the art after reviewing the following detailed description and accompanying drawings, in which:

### BRIEF DESCRIPTION OF THE DRAWINGS

- FIG. 1: schematically illustrates the use of a wireless charging device to wirelessly charge a power-receiving device;
- FIG. 2A: schematically illustrates the architecture of a wireless charging system according to an embodiment of the present invention;
- FIG. 2B: schematically illustrates a variant example of the architecture of the wireless charging system of FIG. 2A;
- FIG. 3: is a schematic perspective view illustrating the appearance of a wireless charging device according to a first embodiment of the present invention;
- FIG. 4A: is a schematic cross-sectional view illustrating the wireless charging device of FIG. 3 and taken along the line AA;
- FIG. 4B: schematically illustrates the relationship between the transmitter coil assembly and the shielding structure of the wireless charging device of FIG. 4A;
- FIG. 5A: is a schematic cross-sectional view illustrating a variant example of the lateral wall of the wireless charging device;
- FIG. 5B: schematically illustrates the relationship between the transmitter coil assembly and the shielding structure of the wireless charging device of FIG. 5A;
- FIG. 6A: is a schematic cross-sectional view illustrating another variant example of the lateral wall of the wireless charging device;
- FIG. 6B: schematically illustrates the relationship between the transmitter coil assembly and the shielding structure of the wireless charging device of FIG. 6A;
- FIG. 7: schematically illustrates an example of the shielding structure of the wireless charging device as shown in FIG. 3;
- FIG. 8: is a schematic circuit block diagram illustrating a transmitter module of the wireless charging device of FIG. 3;
- FIG. 9: is a schematic circuit block diagram illustrating a receiver module of the power-receiving device of the wireless charging system according to the embodiment of the present invention;
- FIG. 10: is a schematic perspective view illustrating the appearance of a power-receiving device of the wireless charging system according to the embodiment of the present invention;
- FIG. 11: is a schematic circuit block diagram illustrating the architecture of the wireless charging system according to another embodiment of the present invention;
- FIG. 12: is a schematic perspective view illustrating the appearance of a wireless charging device according to a second embodiment of the present invention;
- FIG. 13: is a schematic perspective view illustrating the appearance of a wireless charging device according to a third embodiment of the present invention;
- FIG. 14: is a schematic perspective view illustrating the appearance of a wireless charging device according to a fourth embodiment of the present invention; and
- FIG. 15: is a schematic perspective view illustrating the appearance of a wireless charging device according to a fifth embodiment of the present invention.

### DETAILED DESCRIPTION OF THE PREFERRED EMBODIMENT

The present invention will now be described more specifically with reference to the following embodiments. It is to be noted that the following descriptions of preferred embodiments of this invention are presented herein for purpose of illustration and description only. It is not intended to be exhaustive or to be limited to the precise form disclosed.

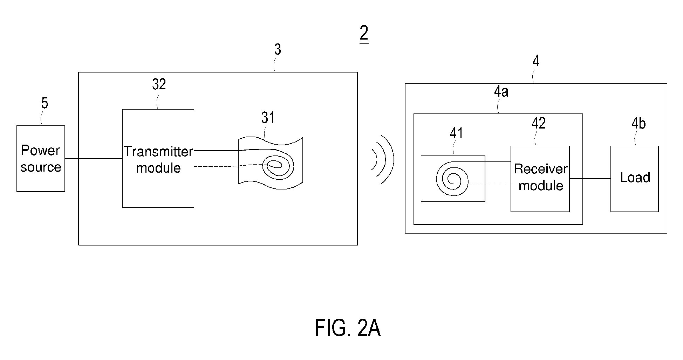

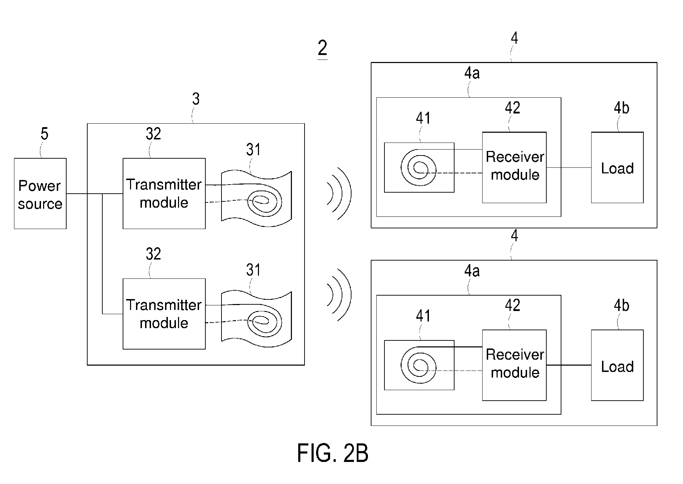

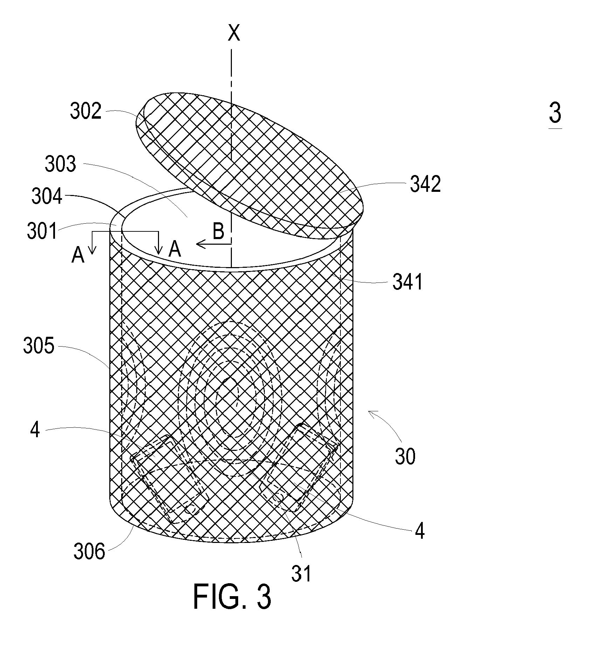

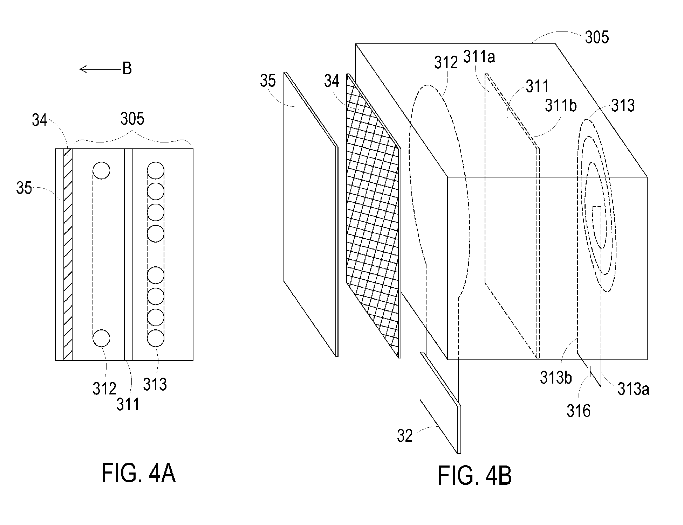

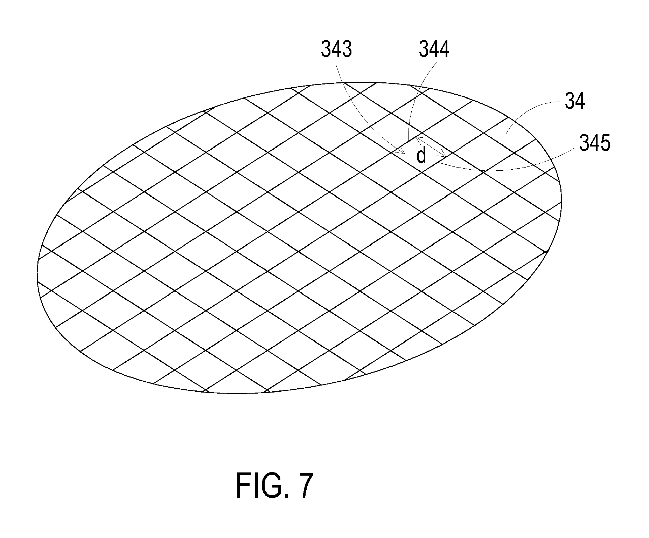

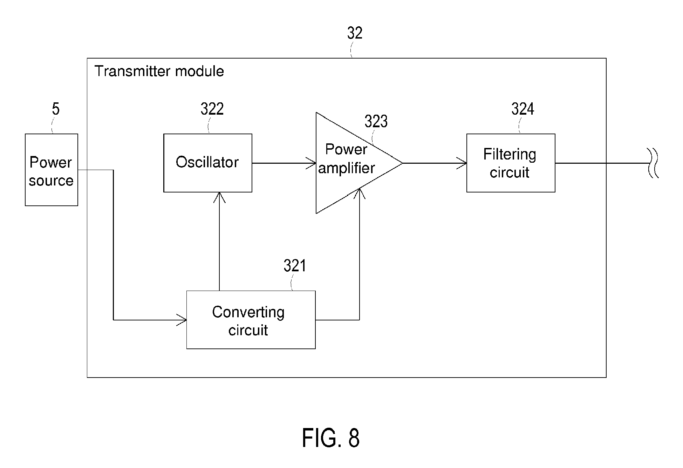

FIG. 2A schematically illustrates the architecture of a wireless charging system according to an embodiment of the present invention. FIG. 2B schematically illustrates a variant example of the architecture of the wireless charging system of FIG. 2A. FIG. 3 is a schematic perspective view illustrating the appearance of a wireless charging device according to a first embodiment of the present invention. FIG. 4A is a schematic cross-sectional view illustrating the wireless charging device of FIG. 3 and taken along the line AA. FIG. 4B schematically illustrates the relationship between the transmitter coil assembly and the shielding structure of the wireless charging device of FIG. 4A. FIG. 7 schematically illustrates an example of the shielding structure of the wireless charging device as shown in FIG. 3. FIG. 8 is a schematic circuit block diagram illustrating a transmitter module of the wireless charging device of FIG. 3.

Please refer to FIGS. 2A, 2B, 3, 4A, 4B, 7 and 8. The wireless charging system 2 comprises a wireless charging device 3 and at least one power-receiving device 4. The wireless charging device 3 is connected with a power source 5. For example, the power source 5 is an AC utility power source, an external battery or a built-in battery. The wireless charging device 3 emits an electromagnetic wave with a specified frequency (i.e., a single frequency) or a wideband frequency (e.g., plural frequencies). For example, the frequency of the electromagnetic wave is in the range between 60Hz and 300GHz. Consequently, by a magnetic induction technology (low frequency) or a magnetic resonance technology (high frequency), the wireless charging device 3 can wirelessly charge one or more power-receiving devices 4 through the electromagnetic wave with identical or different frequencies. For example, the power-receiving device 4 is a mobile phone, a tablet computer or an electrical product.

The wireless charging device 3 comprises a casing 30, at least one transmitter coil assembly 31, at least one transmitter module 32 and a shielding structure 34. The casing 30 comprises a main body 301 and a covering member 302. The main body 301 has an accommodation space 303, an entrance 304, a lateral wall 305 and a bottom plate 306. The covering member 302 is used for covering the entrance 304 of the main body 301. In an embodiment, the covering member 302 is pivotally and rotatably connected with the main body 301. The accommodation space 303 of the main body 301 is used as a charging zone. Moreover, the accommodation space 303 can accommodate one or plural power-receiving devices 4. The transmitter coil assemblies 31 are disposed within the lateral wall 305 and/or the bottom plate 306, and electrically connected with the corresponding transmitter modules 32. The transmitter coil assembly 31 is used as a transmitter terminal of the wireless charging device 3. The transmitter module 32 is electrically connected between the power source 5 and the corresponding transmitter coil assembly 31. Moreover, the transmitter module 32 receives the electric energy from the power source 5 and generates an AC signal to the corresponding transmitter coil assembly 31. In an embodiment, the shielding structure 34 is attached on an outer surface of the lateral wall 305 and/or an outer surface of the bottom plate 306. The shielding structure 34 is used for partially or completely shielding the corresponding transmitter coil assembly 31 and blocking the electromagnetic wave divergence. Consequently, the electromagnetic wave is converged to the accommodation space 303 of the main body 301 so as to wirelessly charge the at least one power-receiving device 4 within the accommodation space 303. In some embodiments, the wireless charging device 3 further comprises a protective layer 35. The protective layer 35 is attached on at least a part of an outer surface of the shielding structure 34 in order to protect the shielding structure 34. For example, the protective layer 35 is made of protective paint. An example of the protective paint includes but is not limited to epoxy resin, acrylic silicone, polyurethane rubber, vinyl acetate-ethylene copolymer gel, polyimide gel, rubbery gel, polyolefin gel, moisture curable polyurethane gel or silicone.

In the embodiment as shown in FIG. 2A, the wireless charging device 3 comprises a transmitter coil assembly 31 and a transmitter module 32. Consequently, the wireless charging device 3 emits the electromagnetic wave with the specified frequency in order to wirelessly charge the power-receiving device 4. In the embodiment as shown in FIG. 2B, the wireless charging device 3 comprises plural transmitter coil assemblies 31 and plural transmitter modules 32. The transmitter coil assemblies 31 are electrically connected with the corresponding transmitter modules 32. The wireless charging device 3 emits the electromagnetic wave with the specified frequency or the plural frequencies in order to wirelessly charge one or plural power-receiving devices 4 at the same time or at different times.

The transmitter coil assembly 31 is flexible. In an embodiment, each transmitter coil assembly 31 comprises a flexible substrate 311, an oscillation starting antenna 312 and a resonant antenna 313. The oscillation starting antenna 312 and the resonant antenna 313 are disposed on two opposite surfaces of the flexible substrate 311. In particular, the oscillation starting antenna 312 is disposed on a first surface 311a of the flexible substrate 311, and the resonant antenna 313 is disposed on a second surface 311b of the flexible substrate 311. Moreover, one or more capacitors 316 are connected between a first end 313a and a second end 313b of the resonant antenna 313. The two ends of the oscillation starting antenna 312 are connected with the transmitter module 32. When an AC signal from the transmitter module 32 is transmitted to the oscillation starting antenna 312 of the transmitter coil assembly 31, a coupling effect of the oscillation starting antenna 312 and the resonant antenna 313 occurs. Consequently, the electromagnetic wave with the specified frequency and a receiver coil assembly 41 of a wireless receiving unit 4a of the corresponding power-receiving device 4 result in a coupling effect. In response to the coupling effect, the electric energy received by the receiver coil assembly 41 is further converted into an output voltage by a receiver module 42. The output voltage is transmitted to a load 4b so as to wirelessly charge the power-receiving device 4.

Please refer to FIG. 3 and FIG. 4A. The resonant antenna 313, the flexible substrate 311, the oscillation starting antenna 312, the shielding structure 34 and the protective layer 35 of the wireless charging device 3 are sequentially arranged in the direction B from a center axis X of the main body 301 to the lateral wall 305. In other words, the transmitter coil assembly 31 is disposed within the lateral wall 305. The resonant antenna 313 is located near the accommodation space 303. The flexible substrate 311 is arranged between the resonant antenna 313 and the oscillation starting antenna 312. The oscillation starting antenna 312 is located near the outer surface of the lateral wall 305, and arranged between the resonant antenna 313 and the shielding structure 34. The shielding structure 34 is attached on an outer surface of the lateral wall 305 for at least partially shielding the resonant antenna 313 and the oscillation starting antenna 312 of the transmitter coil assembly 31. In the embodiment as shown in FIG. 7, the shielding structure 34 is a metal mesh for blocking the divergence of the electromagnetic wave with a higher frequency (e.g., the frequency higher than 6 MHz). The metal mesh is made of metallic material or metallic composite material selected from copper, gold, silver, aluminum, tungsten, chromium, titanium, indium, tin, nickel, iron, or a combination thereof. The pattern of the metal mesh comprises plural mesh units 343. Every two adjacent metal lines 344 and 345 of the mesh unit 343 that are not crisscrossed with each other are separated by a distance d. The distance d is shorter than a wavelength of the electromagnetic wave from the transmitter coil assembly 31. In some other embodiments, the shielding structure 34 is a magnetically-permeable film for blocking the divergence of the electromagnetic wave with a lower frequency (e.g., in the range between 60Hz and 20MHz). The magnetically-permeable film is made of soft magnetic material. Preferably but not exclusively, the soft magnetic material is a mixture of ferrite, zinc-nickel ferrite, zinc-manganese ferrite or iron-silicon-aluminum alloy and adhesive material. In another embodiment, the shielding structure 34 is a composite film for blocking the divergence of the electromagnetic wave with wideband frequency (e.g., in the range between 60Hz and 300GHz). For example, the composite film is a combination of a metal mesh and a magnetically-permeable film.

As shown in FIG. 3, the shielding structure 34 comprises a first shielding part 341 and a second shielding part 342. The first shielding part 341 is attached on an outer surface of the main body 301 for sheltering the transmitter coil assembly 31. The second shielding part 342 is attached on an outer surface of the covering member 302 for blocking the electromagnetic wave divergence from the covering member 302.

In some embodiments, a first adhesive layer and a second adhesive layer (not shown) are disposed on the first surface 311a and the second surface 311b of the flexible substrate 311, respectively. The oscillation starting antenna 312 and the resonant antenna 313 are made of electrically-conductive material. Moreover, the oscillation starting antenna 312 and the resonant antenna 313 are respectively fixed on the first surface 311a and the second surface 311b of the flexible substrate 311 through the corresponding adhesive layers. Each of the first adhesive layer and the second adhesive layer is made of light curable adhesive material, thermally curable adhesive material or any other appropriate curable adhesive material (e.g., vinyl acetate-ethylene copolymer gel, polyimide gel, rubbery gel, polyolefin gel or moisture curable polyurethane gel). In some other embodiments, the adhesive layer contains curable adhesive material and magnetic material. Preferably but not exclusively, the magnetic material is ferromagnetic powder. Alternatively, in some other embodiments, the flexible substrate 311 is replaced by the adhesive layers.

Preferably but not exclusively, the flexible substrate 311 is made of polyethylene terephthalate (PET), thin glass, polyethylennaphthalat (PEN), polyethersulfone (PES), polymethylmethacrylate (PMMA), polyimide (PI) or polycarbonate (PC). In some embodiments, the oscillation starting antenna 312 and the resonant antenna 313 are single-loop antennas or multi-loop antennas. Moreover, the oscillation starting antenna 312 and the resonant antenna 313 have circular shapes, elliptic shapes or rectangular shapes. The electrically-conductive material of the oscillation starting antenna 312 and the resonant antenna 313 includes but is not limited to silver (Ag), copper (Cu), gold (Au), aluminum (Al), tin (Sn) or graphene.

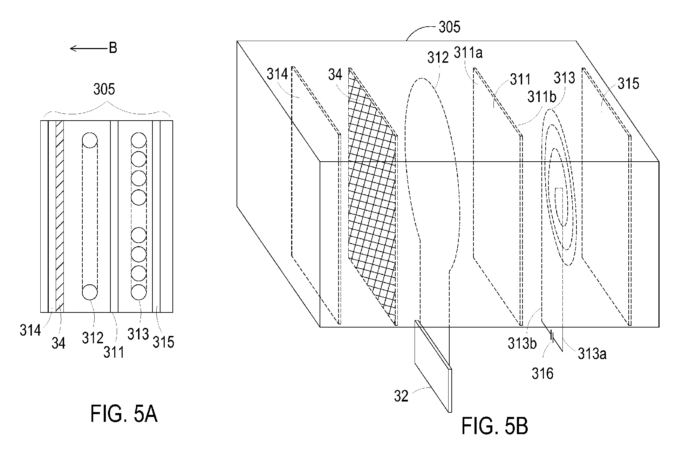

FIG. 5A is a schematic cross-sectional view illustrating a variant example of the lateral wall of the wireless charging device. FIG. 5B schematically illustrates the relationship between the transmitter coil assembly and the shielding structure of the wireless charging device of FIG. 5A. As shown in FIGS. 5A and 5B, the transmitter coil assembly 31 comprises a flexible substrate 311, an oscillation starting antenna 312, a resonant antenna 313, a first protective layer 314 and a second protective layer 315. The oscillation starting antenna 312 and the resonant antenna 313 are covered by the first protective layer 314 and the second protective layer 315, respectively. That is, the first protective layer 314 and the second protective layer 315 are located at the outer sides of the oscillation starting antenna 312 and the resonant antenna 313, respectively. In this embodiment, the shielding structure 34 is disposed within the lateral wall 305 of the main body 301, and arranged between the oscillation starting antenna 312 and the first protective layer 314.

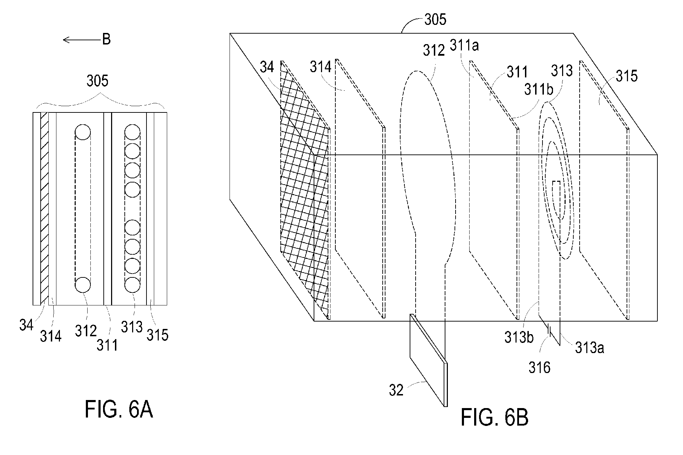

FIG. 6A is a schematic cross-sectional view illustrating another variant example of the lateral wall of the wireless charging device. FIG. 6B schematically illustrates the relationship between the transmitter coil assembly and the shielding structure of the wireless charging device of FIG. 6A. In comparison with FIGS. 5A and 5B, the shielding structure 34 is disposed within the lateral wall 305 of the main body 301, and located at the outer side of the first protective layer 314. The materials of the first protective layer 314 and the second protective layer 315 are identical to the material of the protective layer 35, and are not redundantly described herein.

In an embodiment, the wireless charging device 3 comprises one or plural transmitter modules 32. Each transmitter module 32 is electrically connected with the corresponding thin-film transmitter coil assembly 31. Moreover, each transmitter module 32 comprises a converting circuit 321, an oscillator 322, a power amplifier 323 and a filtering circuit 324. The input end of the converting circuit 321 is electrically connected with the power source 5. The output end of the converting circuit 321 is electrically connected with the oscillator 322 and the power amplifier 323. The converting circuit 321 is used for converting the electric energy from the power source 5 and providing the regulated voltage to the oscillator 322 and the power amplifier 323. For example, the converting circuit 321 comprises a DC-to-DC converter, an AC-to-AC converter and/or a DC-to-AC convertor. The oscillator 322 is used for adjustably outputting an AC signal with a specified frequency. The AC signal with the specified frequency is amplified by the power amplifier 323. The resonant wave and the undesired frequency of the AC signal are filtered by the filtering circuit 324. The filtered AC signal is transmitted to the oscillation starting antenna 312 of the transmitter coil assembly 31.

In this embodiment, each power-receiving device 4 comprises the wireless receiving unit 4a and the load 4b. The wireless receiving unit 4a and the load 4b are separate components or integrated into a single component. For example, the wireless receiving unit 4a is a wireless receiver pad, and the load 4b is a mobile phone without the function of being wirelessly charged. However, after the wireless receiver pad and the mobile phone are electrically connected with each other, the mobile phone can be wirelessly charged. Alternatively, in another embodiment, the wireless receiving unit 4a is disposed within a casing of the load 4b (e.g., the mobile phone).

Please refer to FIGS. 2A, 2B, 3, 4A and 4B again. The wireless receiving unit 4a of each power-receiving device 4 comprises the receiver coil assembly 41 and the receiver module 42. Like the transmitter coil assembly 31, the receiver coil assembly 41 comprises a flexible substrate, an oscillation starting antenna and a resonant antenna. Moreover, one or more capacitors are connected between two ends of the resonant antenna. The structures, materials and functions of the flexible substrate, the oscillation starting antenna and the resonant antenna of the receiver coil assembly 41 are similar to those of the flexible substrate, the oscillation starting antenna and the resonant antenna of the transmitter coil assembly 31 as shown in FIGS. 4A and 4B, and are not redundantly described herein. In another embodiment, the receiver coil assembly 41 comprises a flexible substrate, an oscillation starting antenna, a resonant antenna, a first protective layer and a second protective layer. The structure and material of the receiver coil assembly 41 are similar to those of the transmitter coil assembly 31 as shown in FIGS. 5A, 5B, 6A and 6B, and are not redundantly described herein. Due to the coupling effect between the receiver coil assembly 41 and the transmitter coil assembly 31, the electric energy from the transmitter coil assembly 31 of the wireless charging device 3 can be received by the receiver coil assembly 41 according to magnetic resonance or magnetic induction. Consequently, when the power-receiving device 4 is disposed within the accommodation space 303 of the wireless charging device 3, if a higher frequency (e.g., 6.78MHz) of the electromagnetic wave emitted by the transmitter coil assembly 31 of the wireless charging device 3 and the frequency of the receiver coil assembly 41 of the power-receiving device 4 are identical, the electric energy can be transmitted from the transmitter coil assembly 31 of the wireless charging device 3 to the receiver coil assembly 41 of the wireless receiving unit 4a according to magnetic resonance. Alternatively, when the power-receiving device 4 is disposed within the accommodation space 303 of the wireless charging device 3, if a lower frequency (e.g., 100KHz) of the electromagnetic wave emitted by the transmitter coil assembly 31 of the wireless charging device 3 and the frequency of the receiver coil assembly 41 of the power-receiving device 4 are identical, the electric energy can be transmitted from the transmitter coil assembly 31 of the wireless charging device 3 to the receiver coil assembly 41 of the wireless receiving unit 4a according to magnetic induction. Since the shielding structure 34 can block the divergence of the electromagnetic wave which is emitted by the transmitter coil assembly 31, the electromagnetic wave is converged to the accommodation space 303 of the main body 301. Under this circumstance, the charging efficiency is enhanced.

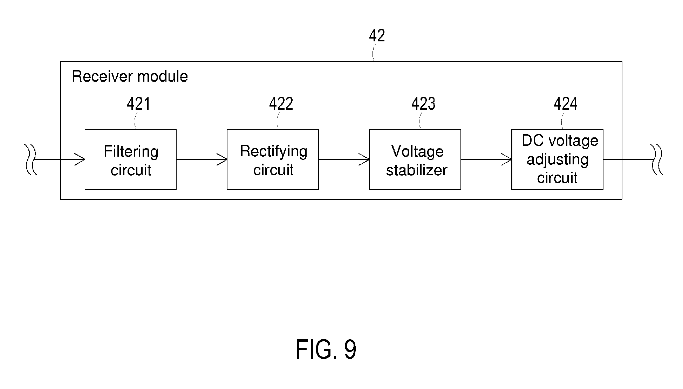

FIG. 9 is a schematic circuit block diagram illustrating a receiver module of the power-receiving device of the wireless charging system according to the embodiment of the present invention. Please refer to FIGS. 2A, 2B and 9. The wireless receiving unit 4a comprises at least one receiver module 42. Each receiver modules 42 comprises a filtering circuit 421, a rectifying circuit 422, a voltage stabilizer 423 and a DC voltage adjusting circuit 424. The filtering circuit 421 is electrically connected with the resonant antenna of the receiver coil assembly 41. The resonant wave of the AC signal from the receiver coil assembly 41 is filtered by the filtering circuit 421. The rectifying circuit 422 is electrically connected with the filtering circuit 421 and the voltage stabilizer 423 for converting the AC signal into a rectified DC voltage. The voltage stabilizer 423 is electrically connected with the rectifying circuit 422 and the DC voltage adjusting circuit 424 for stabilizing the rectified DC voltage to a stabilized DC voltage with a rated voltage value. The DC voltage adjusting circuit 424 is electrically connected with the voltage stabilizer 423 and the load 4b for adjusting (e.g., increasing) the stabilized DC voltage to a regulated DC voltage. The regulated DC voltage is provided to the load 4b to charge the load 4b (e.g., the battery of the mobile phone).

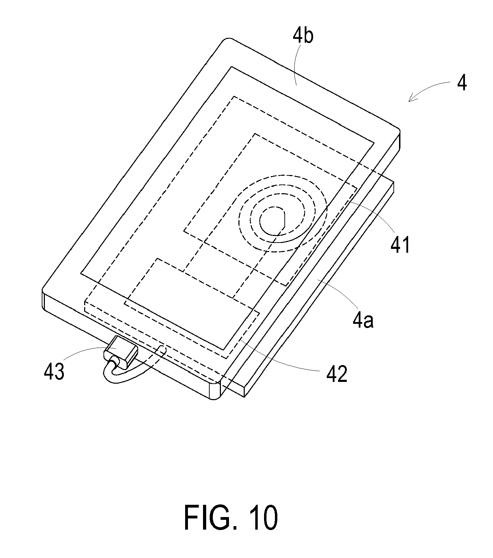

FIG. 10 is a schematic perspective view illustrating the appearance of a power-receiving device of the wireless charging system according to the embodiment of the present invention. Please refer to FIGS. 2A, 2B and 10. The power-receiving device 4 comprises the wireless receiving unit 4a and the load 4b. In this embodiment, the wireless receiving unit 4a of the power-receiving device 4 is a wireless receiver pad, and the load 4b is a mobile phone without the function of being wirelessly charged. When a connector 43 of the wireless receiving unit 4a (i.e., the wireless receiver pad) is electrically connected with a corresponding connector of the load 4b (i.e., the mobile phone), the electric energy from the transmitter coil assembly 31 of the wireless charging device 3 can be received by the receiver coil assembly 41 and the receiver module 42 of the wireless receiving unit 4a. Under this circumstance, even if the mobile phone does not have the function of being wirelessly charged, the mobile phone can be wirelessly charged by the wireless charging device 3 through the wireless receiving unit 4a.

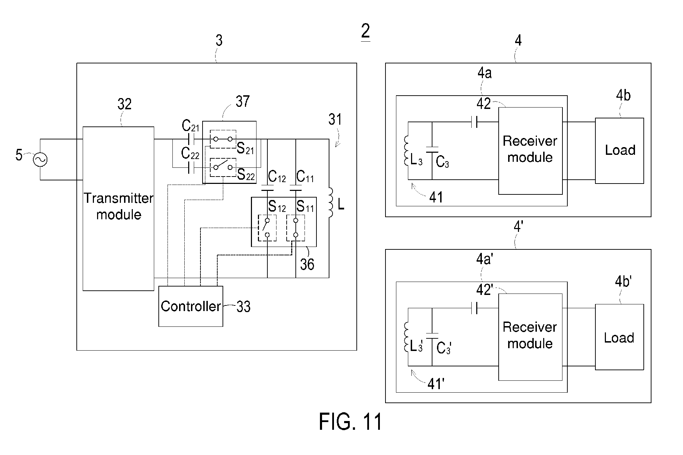

FIG. 11 is a schematic circuit block diagram illustrating the architecture of the wireless charging system according to another embodiment of the present invention. In this embodiment, the wireless charging system 2 comprise a wireless charging device 3 and two power-receiving devices 4 and 4'. The power-receiving device 4 comprises a wireless receiving unit 4a, and the power-receiving device 4' comprises a wireless receiving unit 4a'. According to the specifications and features of the wireless receiving units 4a and 4a', the wireless charging device 3 can adaptively or selectively charge the load 4b and 4b' of the power-receiving devices 4 and 4' by means of magnetic resonance or magnetic induction. In this embodiment, the wireless charging device 3 comprises a transmitter coil assembly 31, a transmitter module 32, a controller 33, a first switching circuit 36, a second switching circuit 37, two first capacitors C11, C12 and two second capacitors C21, C22. The structures, functions and principles of the transmitter coil assembly 31 and the transmitter module 32 are similar to those mentioned above, and are not redundantly described herein. The structures, functions and principles of the receiver coil assemblies 41, 41' and the receiver modules 42, 42' are similar to those mentioned above, and are not redundantly described herein. The first capacitors C11 and C12 are connected with the oscillation starting antenna (not shown) of the transmitter coil assembly 31 in parallel. Moreover, the first capacitors C11 and C12 are connected with each other in parallel so as to be inductively coupled with the receiver coil assemblies 41 and 41' of the power-receiving devices 4 and 4'. The second capacitors C21 and C22 are connected with the output terminal of the transmitter module 32 and the oscillation starting antenna (not shown) of the transmitter coil assembly 31 in series. Moreover, the second capacitors C21 and C22 are connected with each other in parallel so as to be inductively coupled with the transmitter module 32. Consequently, the second capacitors C21 and C22 can filter the signal and increase the charging performance. The first switching circuit 36 comprises two first switching elements S11 and S12. The first switching elements S11 and S12 are connected with the corresponding first capacitors C11 and C12 in series, respectively.

The second switching circuit 37 comprises two second switching elements S21 and S22. The second switching elements S21 and S22 are connected with the corresponding second capacitors C21 and C22 in series, respectively. The controller 33 is electrically connected with the first switching elements S11 and S12 of the first switching circuit 36 and the second switching elements S21 and S22 of the second switching circuit 37. According to a sensing signal from the wireless receiving units 4a and 4a' of the power-receiving devices 4 and 4' based on the wireless charging technology they adapted, the controller 33 generates a control signal. According to the control signal, the first switching elements S11 and S12 of the first switching circuit 36 and the second switching elements S21 and S22 of the second switching circuit 37 are selectively turned on or turned off. Consequently, the wireless charging device 3 can adaptively or selectively charge the load 4b and 4b' of the power-receiving devices 4 and 4' by means of magnetic resonance or magnetic induction according to the specifications and features of the wireless receiving units 4a and 4a'.

The working frequencies of the wireless charging device 3 and the power-receiving devices 4 and 4' can be calculated according to the formula: fa = 1/[(2π)×(LaCa)^{1/2}] = 1/[(2π)×(LbCb)^{1/2}] = fb. In this embodiment, fa is the working frequency of the wireless charging device 3, fb is the working frequency of the power-receiving device 4 or 4', Ca is the capacitance value of the first capacitor C11 or C12, La is the inductance value of the oscillation starting antenna of the transmitter coil assembly 31, Cb is the capacitance value of the third capacitor C3 or C3' of the power-receiving device 4 or 4', and Lb is the inductance value of the oscillation starting antenna of the receiver coil assembly 41 or 41'. For example, the capacitance values of the first capacitors C11 and C12 are respectively 0.5µF and 0.1nF, and the inductance value L of the oscillation starting antenna of the transmitter coil assembly 31 is 5µH. If the capacitance value of the third capacitor C3 of the power-receiving device 4 is 0.5µF and the inductance value L3 of the oscillation starting antenna of the receiver coil assembly 41 is 5µH, the controller 33 of the wireless charging device 3 issues a corresponding control signal to the first switching circuit 36 and the second switching circuit 37. According to this control signal, the first switching element S11 and the second switching element S21 are turned on, and the first switching element S12 and the second switching element S22 are turned off. Consequently, the first capacitor C11 with the capacitance value of 0.5µF is selected by the wireless charging device 3 and the inductance value L of the oscillation starting antenna of the transmitter coil assembly 31 is 5µH. Under this circumstance, the working frequency of the wireless charging device 3 and the working frequency of the wireless receiving unit 4a of the power-receiving device 4 are both 100 KHz. Consequently, the wireless receiving unit 4a of the power-receiving device 4 is wirelessly charged by the wireless charging device 3 at the lower frequency according to magnetic induction. Whereas, if the capacitance value of the third capacitor C3' of the power-receiving device 4' is 0.1nF and the inductance value L3' of the oscillation starting antenna of the receiver coil assembly 41' is 5µH, the controller 33 of the wireless charging device 3 issues a corresponding control signal to the first switching circuit 36 and the second switching circuit 37. According to this control signal, the first switching element S12 and the second switching element S22 are turned on, and the first switching element S11 and the second switching element S21 are turned off. Consequently, the first capacitor C12 with the capacitance value of 0.1nF is selected by the wireless charging device 3 and the inductance value L of the oscillation starting antenna of the transmitter coil assembly 31 is 5µH. Under this circumstance, the working frequency of the wireless charging device 3 and the working frequency of the wireless receiving unit 4a' of the power-receiving device 4' are both 6.78MHz. Consequently, the wireless receiving unit 4a' of the power-receiving device 4' is wirelessly charged by the wireless charging device 3 at the higher frequency according to magnetic resonance. The working frequency is presented herein for purpose of illustration and description only.

In this embodiment as shown in FIG. 3, the main body 301 is a hollow cylinder with the bottom plate and the lateral wall, and the covering member 302 is pivotally coupled with the main body 301. Consequently, the entrance 304 of the main body 301 is covered by the main body 301. In addition, plural transmitter coil assemblies 31 are disposed within the lateral wall 305 of the hollow cylinder. It is noted that the shape of the main body 301 of the wireless charging device 3 may be varied according to practical requirements.

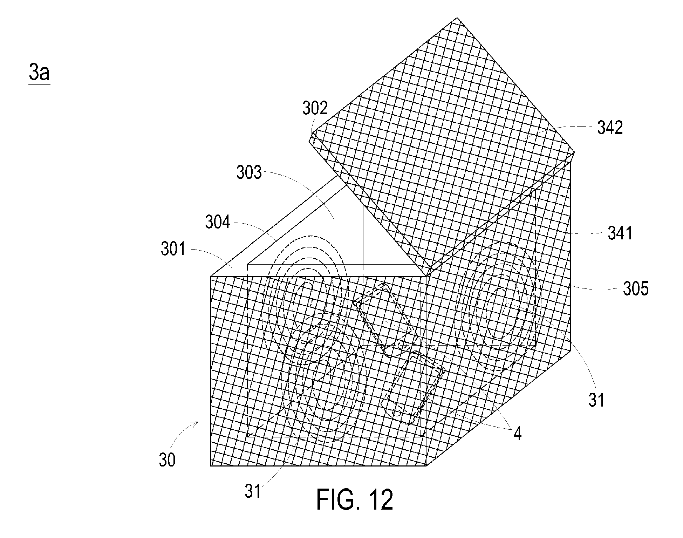

FIG. 12 is a schematic perspective view illustrating the appearance of a wireless charging device according to a second embodiment of the present invention. Component parts and elements corresponding to those of the first embodiment are designated by identical numeral references, and detailed descriptions thereof are omitted. In this embodiment, the main body 301 of the wireless charging device 3a is a hollow box with a bottom plate and a lateral wall, and the covering member 302 is pivotally and rotatably connected with the main body 301 for covering the entrance 304 of the main body 301. In addition, the plural transmitter coil assemblies 31 are disposed within the lateral wall 305 of the hollow box.

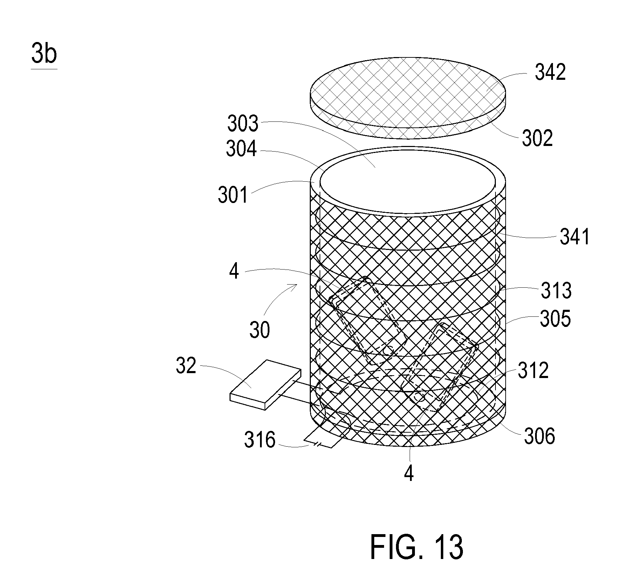

FIG. 13 is a schematic perspective view illustrating the appearance of a wireless charging device according to a third embodiment of the present invention. Component parts and elements corresponding to those of the first embodiment are designated by identical numeral references, and detailed descriptions thereof are omitted. In this embodiment, the main body 301 of the wireless charging device 3b is a hollow cylinder with a bottom plate and a lateral wall. Especially, the resonant antenna 313 of the transmitter coil assembly 31 is spirally wound within the lateral wall 305 of the hollow cylinder, and the oscillation starting antenna 312 of the transmitter coil assembly 31 is disposed within the bottom plate 306 of the hollow cylinder.

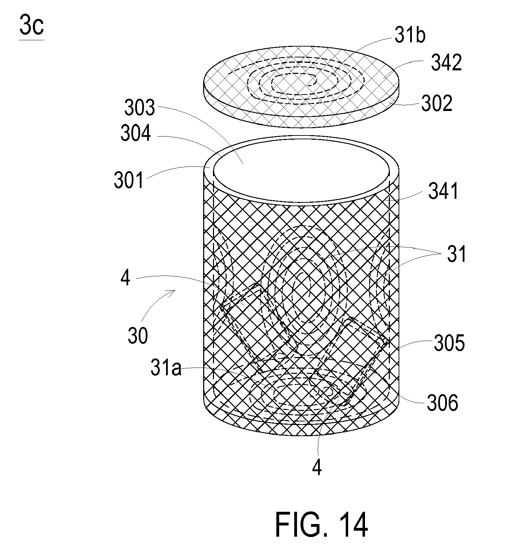

FIG. 14 is a schematic perspective view illustrating the appearance of a wireless charging device according to a fourth embodiment of the present invention. Component parts and elements corresponding to those of the first embodiment are designated by identical numeral references, and detailed descriptions thereof are omitted. In this embodiment, the main body 301 of the wireless charging device 3c is hollow cylinder with a bottom plate and a lateral wall. In this embodiment, plural transmitter coil assemblies 31 are disposed within the lateral wall 305 of the hollow cylinder, an additional transmitter coil assembly 31a is disposed within the bottom plate 306 of the hollow cylinder, and another additional transmitter coil assembly 31b is disposed within the covering member 302. The structures and functions of the transmitter coil assemblies 31a and 31b are similar to those of the transmitter coil assemblies 31, and are not redundantly described herein.

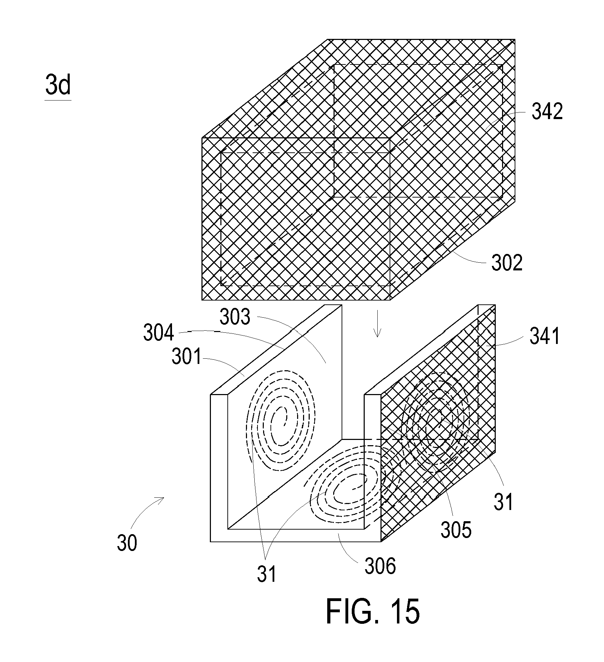

FIG. 15 is a schematic perspective view illustrating the appearance of a wireless charging device according to a fifth embodiment of the present invention. Component parts and elements corresponding to those of the first embodiment are designated by identical numeral references, and detailed descriptions thereof are omitted. In this embodiment, the main body 301 of the wireless charging device 3d is a U-shaped groove structure with a bottom plate 306 and a lateral wall 305. Moreover, the plural transmitter coil assemblies 31 are disposed within the lateral wall 305 and/or the bottom plate 306. The covering member 302 is a box structure for completely covering the main body 301. Especially, the first shielding part 341 of the shielding structure 34 is attached on the outer surface of the main body 301, and the second shielding part 342 of the shielding structure 34 is attached on the outer surface of the covering member 302. After the main body 301 is covered by the covering member 302, the divergence of the electromagnetic wave from the wireless charging device is blocked by the shielding structure 34. Consequently, the electromagnetic wave is converged to the accommodation space 303 of the main body 301 so as to wirelessly charge the at least one power-receiving device 4 within the accommodation space 303. Under this circumstance, the wireless charging efficiency is enhanced.

From the above descriptions, the present invention provides a wireless charging device and a wireless charging system. The wireless charging device can emit an electromagnetic wave with a specified frequency or plural frequencies for wirelessly charging the one or plural power-receiving devices. Moreover, since the wireless charging device has the function of suppressing the divergence of the electromagnetic wave, the injury of the electromagnetic wave to the user is largely reduced. Moreover, since the electromagnetic wave is converged to a charging zone to charge the one or plural power-receiving devices in a non-contact manner, the charging efficiency of the wireless charging device is enhanced. The wireless charging device has an accommodation space for accommodating the one or plural power-receiving devices. Consequently, the one or plural power-receiving device accommodated within the accommodation space can be wirelessly charged by the electromagnetic wave with the specified frequency or the plural frequencies at the same time or at different times. Moreover, since the structure of the wireless charging device is simple, the fabricating cost is low and the application and convenience are extended. Moreover, the wireless charging system comprises a wireless charging device and one or plural power-receiving devices. The wireless charging device can adaptively or selectively charge the power-receiving devices according to magnetic resonance or magnetic induction.

## Claims

1. A wireless charging device (3, 3a, 3b, 3c, 3d) for wirelessly charging at least one power-receiving device (4, 4'), the wireless charging device (3, 3a, 3b, 3c, 3d) comprising:
a casing (30) comprising a main body (301), wherein the main body (301) has an accommodation space (303) and an entrance (304), and the at least one power-receiving device (4, 4') is accommodated within the accommodation space (303);
at least one transmitter coil assembly (31, 31a, 31b) disposed within the main body (301), and emitting an electromagnetic wave with at least one specified frequency for wirelessly charging the at least one power-receiving device (4, 4'), wherein each transmitter coil assembly (31, 31a, 31b) comprises at least one antenna (312, 313) for receiving an AC signal so as to emit the electromagnetic wave; and
a shielding structure (34) attached on an outer surface of the main body (301) or disposed within the main body (301), wherein the shielding structure (34) at least shields the antenna (312, 313) of the transmitter coil assembly (31, 31a, 31b) so as to block divergence of the electromagnetic wave.

2. The wireless charging device (3, 3a, 3b, 3c, 3d) according to claim 1, wherein each transmitter coil assembly (31, 31a, 31b) comprises a flexible substrate (311), an oscillation starting antenna (312) and a resonant antenna (313), wherein the oscillation starting antenna (312) and the resonant antenna (313) are disposed on two opposite surfaces (311a, 311b) of the flexible substrate (311), the oscillation starting antenna (312) receives the AC signal, at least one capacitor (316) is connected between a first end (313a) and a second end (313b) of the resonant antenna (313), and the electromagnetic wave is emitted in response to a coupling effect of the resonant antenna (313) and the oscillation starting antenna (312).

3. The wireless charging device (3, 3a, 3b, 3c, 3d) according to claim 2, wherein each transmitter coil assembly (31, 31a, 31b) further comprises:
a first protective layer (314) covering the oscillation starting antenna (312); and
a second protective layer (315) covering the resonant antenna (313),
wherein the shielding structure (34) is attached on an outer surface of the first protective layer (314), or the shielding structure (34) is arranged between the first protective layer (314) and the oscillation starting antenna (312).

4. The wireless charging device (3, 3a, 3b, 3c, 3d) according to any of the preceding claims, wherein the main body (301) is a hollow cylinder with a bottom plate (306) and a lateral wall (305), wherein the resonant antenna (313) of the transmitter coil assembly (31) is spirally wound within the lateral wall (305), and the oscillation starting antenna (312) of the transmitter coil assembly (31) is disposed within the bottom plate (306).

5. The wireless charging device (3, 3a, 3b, 3c, 3d) according to any of the preceding claims, wherein the casing (30) further comprises a covering member (302), and the entrance (304) of the main body (301) is covered by the covering member (302), wherein the shielding structure (34) comprises:
a first shielding part (341) attached on the outer surface of the main body (301) for sheltering the transmitter coil assembly (31, 31a); and
a second shielding part (342) attached on an outer surface of the covering member (302).

6. The wireless charging device (3, 3a, 3b, 3c, 3d) according to any of the preceding claims, wherein the casing (30) further comprises a covering member (302), and the entrance (304) of the main body (301) is covered by the covering member (302), wherein the main body (301) is a hollow cylinder or a hollow box with a bottom plate (306) and a lateral wall (305), the covering member (302) is pivotally connected with the main body (301), and the at least one transmitter coil assembly (31) is disposed within the lateral wall (305) of the main body (301).

7. The wireless charging device (3, 3a, 3b, 3c, 3d) according to claim 6, further comprising another two transmitter coil assemblies (31a, 31b) disposed within the bottom plate (306) of the main body (301) and the covering member (302), respectively.

8. The wireless charging device (3, 3a, 3b, 3c, 3d) according to any of the preceding claims, wherein the casing (30) further comprises a covering member (302), and the entrance (304) of the main body (301) is covered by the covering member (302), wherein the main body (301) further comprises a lateral wall (305) and a bottom plate (306), wherein the lateral wall (305) and the bottom plate (306) of the main body (301) are collaboratively formed as a U-shaped groove structure, wherein the at least one transmitter coil assembly (31) is disposed within the lateral wall (305) and/or the bottom plate (306), and the main body (301) is covered by the covering member (302).

9. The wireless charging device (3, 3a, 3b, 3c, 3d) according to any of the preceding claims, further comprising a protective layer (35), wherein the protective layer (35) covers at least a part of the shielding structure (34).

10. The wireless charging device (3, 3a, 3b, 3c, 3d) according to any of the preceding claims, wherein the shielding structure (34) is a metal mesh, a magnetically-permeable film, or a combination of the metal mesh and the magnetically-permeable film, wherein a pattern of the metal mesh comprises plural mesh units (343), wherein every two adjacent metal lines (344, 345) that are not crisscrossed with each other are separated by a distance (d), and the distance (d) is shorter than a wavelength of the electromagnetic wave.

11. The wireless charging device (3, 3a, 3b, 3c, 3d) according to any of the preceding claims, further comprising at least one transmitter module (32), wherein the at least one transmitter module (32) is electrically connected with the corresponding transmitter coil assembly (31, 31a, 31b), wherein each transmitter module (32) comprises:
a converting circuit (321) electrically connected with a power source (5) for converting an electric energy from the power source (5);
an oscillator (322) electrically connected with the converting circuit (321) for adjustably outputting the AC signal with the specified frequency;
a power amplifier (323) connected with the oscillator (322) and the converting circuit (321) for amplifying the AC signal; and
a filtering circuit (324) connected with the power amplifier (323) for filtering the AC signal and outputting the filtered AC signal to the corresponding transmitter coil assembly (31, 31a, 31b).

12. A wireless charging system (2), comprising:
a wireless charging device (3, 3a, 3b, 3c, 3d), particularly according to any of claims 1 to 11, comprising:
a casing (30) comprising a main body (301), wherein the main body (301) has an accommodation space (303) and an entrance (304);
at least one transmitter coil assembly (31, 31a, 31b) disposed within the main body (301), and emitting an electromagnetic wave with at least one specified frequency, wherein each transmitter coil assembly (31, 31a, 31b) comprises at least one antenna (312, 313) for receiving an AC signal so as to emit the electromagnetic wave; and
a shielding structure (34) attached on an outer surface of the main body (301) or disposed within the main body (301), wherein the shielding structure (34) at least shields the antenna (312, 313) of the transmitter coil assembly (31, 31a, 31b) so as to block divergence of the electromagnetic wave; and
at least one power-receiving device (4, 4') accommodated within the accommodation space (303) of the casing (30), wherein each power-receiving device (4, 4') comprises a receiver coil assembly (41, 41'), and the receiver coil assembly (41, 41') receives an electric energy from the wireless charging device (3, 3a, 3b, 3c, 3d) in response to a coupling effect of the receiver coil assembly (41, 41') and the corresponding transmitter coil assembly (31, 31a, 31b).

13. The wireless charging system according to claim 12, wherein each transmitter coil assembly (31, 31a, 31b) of the wireless charging device (3, 3a, 3b, 3c, 3d) comprises a flexible substrate (311), an oscillation starting antenna (312) and a resonant antenna (313), wherein the oscillation starting antenna (312) and the resonant antenna (313) are disposed on two opposite surfaces (311a, 311b) of the flexible substrate (311), the oscillation starting antenna (312) receives the AC signal, at least one capacitor (316) is connected between a first end (313a) and a second end (313b) of the resonant antenna (313), and the electromagnetic wave is emitted in response to a coupling effect of the resonant antenna (313) and the oscillation starting antenna (312), wherein the receiver coil assembly (41, 41') of the power-receiving device (4, 4') and the transmitter coil assembly (31, 31a, 31b) of the wireless charging device (3, 3a, 3b, 3c, 3d) have the same structures.

14. The wireless charging system according to claim 12 or 13, wherein each power-receiving device (4, 4') further comprises a receiver module (42, 42'), wherein the receiver module (42, 42') is connected with the corresponding receiver coil assembly (41, 41') for converting the electric energy that is received by the receiver coil assembly (41, 41'), and the receiver module (42, 42') comprises:
a filtering circuit (421) electrically connected with the receiver coil assembly (41, 41') for filtering an AC signal from the receiver coil assembly (41,41');
a rectifying circuit (422) electrically connected with the filtering circuit (421) for converting the AC signal into a rectified DC voltage;
a voltage stabilizer (423) electrically connected with the rectifying circuit (422) for stabilizing the rectified DC voltage to a stabilized DC voltage with a rated voltage value; and
a DC voltage adjusting circuit (424) electrically connected with the voltage stabilizer (423) and a load (4b, 4b') for adjusting the stabilized DC voltage to a regulated DC voltage and providing the regulated DC voltage to the load (4b, 4b').

15. The wireless charging system according to any of claims 12 to 14, wherein the wireless charging device (3, 3a, 3b, 3c, 3d) further comprises a controller (33), wherein the power-receiving device (4, 4') is wirelessly charged by the wireless charging device (3, 3a, 3b, 3c, 3d) under control of the controller (33) according to magnetic resonance or magnetic induction.
